# EUROPÄISCHE PATENTSCHRIFT

(11) **EP 0 391 382 B1**
(45) Veröffentlichungstag und Bekanntmachung des Hinweises auf die Patenterteilung: **31.08.1994**
(21) Anmeldenummer: 90106419.6
(22) Anmeldetag: 04.04.1990
(51) Int. Cl.: H01J 9/50

(54) **Verfahren zur Rückgewinnung des Leuchtstoffes bzw. Leuchtstoffgemisches und des Quecksilbers von ausgebrannten bzw. nicht-funktionsfähigen Leuchtstofflampen**
Method of recovering luminophor, or luminophors mixture, and mercury from burnt or unserviceable fluorescent lamps
Procédé de récupération du luminophore, ou du mélange des luminophores, et du mercure des lampes fluorescentes grillées ou inutilisables

(30) Priorität: 07.04.1989 DE 3911395
(43) Veröffentlichungstag der Anmeldung: 10.10.1990
(73) Patentinhaber: Frankenbach, Paul, D-61462 Königstein (DE)
(72) Erfinder: Frankenbach, Paul, D-61462 Königstein (DE)
(74) Vertreter: TER MEER STEINMEISTER & PARTNER GbR

(56) Entgegenhaltungen:
- EP-A- 0 157 249
- EP-A- 0 200 697
- PATENT ABSTRACTS OF JAPAN, Band 1, Nr. 93 (M-77)[2492], 26. August 1977 & JP-A-52-35 486

## Beschreibung

Gegenstand der Erfindung ist ein Verfahren zur Rückgewinnung des Leuchtstoffes bzw. des Leuchtstoffgemisches und des Quecksilbers von ausgebrannten bzw. nicht-funktionsfähigen Leuchstofflampen, durch Abtrennen der Enden des Gasentladungsgefäßes der Leuchstofflampen, Ausblasen des Leuchtstoffes bzw. des Leuchstoffgemisches und des Quecksilbers mit einem gasförmigen Medium aus dem Gasentladungsgefäß, Sammeln und Auftrennen des ausgeblasenen Gemisches.

Es ist bekannt, daß Gasentladungslampen, zum Beispiel die Leuchtstofflampen, eine höhere Lichtausbeute als die Glühlampen ermöglichen und daher weit wirtschaftlicher sind als diese, zumal auch ihre Lebensdauer größer ist. Aufgrund der Energieverknappung finden die Leuchtstofflampen wegen ihrer vorher genannten Eigenschaften eine immer größer werdende Verwendung auf Kosten der herkömmlichen Glühlampen in Industrie, Büro und Haushalt. Mit der großen Verbreitung der Leuchtstofflampen treten jedoch Probleme in der Entsorgung dieser Produkte auf, da sie einerseits das Umweltgift Quecksilber und andererseits wertvolle Substanzen, i.e. Leuchtstoffe, enthalten. Daher können diese Lampen nach ihrer Verwendung als auch aufgrund gesetzlicher Vorschriften nicht mit dem Hausmüll beseitigt, sondern müssen auf speziellen Sondermülldeponien entsorgt werden, was zu einer Erhöhung der Beseitigungskosten führt. Daher ist es wünschenswert, Leuchtstofflampen nicht nur wegen des Umweltschutzes, sondern auch im Zuge eines sparsamen Umganges mit Rohstoffen, i.e. zur Wiedergewinnung der Leuchtstoffe, in ein Recyclingsystem einzubinden.

Kulander beschreibt in "Sprechsaal", Vol. 119, No. 11 (1986), Seiten 1016 bis 1018 bereits eine Möglichkeit, Quecksilber aus Leuchstoffröhren und Lampen zurückzugewinnen, indem sie zwecks Volumenverminderung in einem Brecher zerkleinert und anschließend zur Quecksilberrückgewinnung einer Destillation unterworfen werden. Diese Vorrichtungen weisen jedoch nicht nur große Abmessungen auf, sondern erfordern ebenfalls einen sehr hohen Energieverbrauch, da während der Quecksilberdestillation der gesamte zerkleinerte Festabfall miterhitzt werden muß. Weiterhin gibt Kulander die Möglichkeit an, ungebrochene aber ausgebrannte Leuchtstoffröhren in einer Leerungsmaschine zu behandeln, indem diese Maschine die Enden der Leuchtstoffröhren abtrennt und das Pulver aus den Röhren entfernt. Die Leuchtstoffröhren werden anschließend der Glasaufarbeitung zugeführt, während die Quecksilberhaltigen Enden und das Pulver einer Destillation unterworfen werden.

Kulander offenbart weiterhin in der US-PS 4 715 838 ein Verfahren, gemäß dem ein Stempel zum Ablösen des Leuchtstoffgemisches von einem Ende zu dem anderen Ende des geöffneten Gasentladungsgefäßes der Leuchtstofflampe eingeführt wird, wobei das Leuchtstoffgemisch als auch das anhaftende Quecksilber durch Absaugen entfernt werden. Dieses Verfahren ist jedoch nur für gerade Leuchstoffröhren, nicht jedoch für Leuchtstofflampen mit gebogener Gasentladungsröhre oder Ellipsoidkolben geeignet, obwohl diese einen hohen Anteil der Leuchtstofflampen ausmachen. Außerdem ist die Wirtschaftlichkeit der Quecksilberrückgewinnungsanlage eingeschränkt durch die Tatsache, daß der Vorgang des Kolbeneinführens in die Gasentladungsröhre recht lange dauert, als auch daß verschiedene Kolbengrößen vorhanden sein müssen, da mittlerweile Leuchtstofflampen mit Gasentladungsröhren unterschiedlichen Durchmessers im Verkehr sind. Weiterhin muß eine quantitative Entfernung des Leuchtstoffes bzw. Leuchtstoffgemisches und des Quecksilbers aus dem Gasentladungsgefäß gewährleistet sein, da andernfalls durch dieser Verunreinigungen die Wiederverwendung der Gasentladungsröhren in der Glasherstellung eine kostenintensive Glasaufarbeitung erforderlich macht.

Die EP-A-0 157 249 beschreibt ein Verfahren zur Aufarbeitung von ausgebrannten und nicht-funktionsfähigen stabförmigen Leuchtstofflampen, gemäß dem die Enden des Entladungsgefäßes abgetrennt und die Leuchtstoffbeschichtung und das Quecksilber mittels Druckluft aus dem Entladungsgefäß entfernt werden. Das gasförmige Quecksilber wird über ein auswechselbares Feinststaubfilter geleitet und mittels präparierter Aktivkohlefilter oder Silicagel aufgrund ihrer Ab- oder Adsorptionseigenschaften aufgefangen, und das Leuchstoffgemisch durch Gewebefilter abgetrennt. Anschließend werden das Quecksilber und das Glas einer Wiederverwertung und das Leuchtstoffgemisch einer weiteren Aufarbeitung zugeführt. Es hat sich dabei herausgestellt, daß mit dieser Methode nur etwa 80 bis 90% des vorhandenen und an der Glaswandung anhaftenden Leuchtstoffes bzw. Quecksilbers beseitigt werden können. Wie sich gezeigt hat, läßt sich auch dann keine vollständige Beseitigung des noch anhaftenden Leuchtstoffes und Quecksilbers erreichen, wenn sich an den ersten ein zweiter Ausblasvorgang mit erhöhtem Druck anschließt.

Der Erfindung liegt daher die Aufgabe zugrunde, ein Verfahren anzugeben, das nicht nur eine Recyclinganlage mit geringen Abmessungen ermöglicht, sondern auch gewährleistet, daß eine möglichst einfache und vollständige Entfernung der anhaftenden Leuchtstoffe und des Quecksilbers erreicht wird, und diese Materialien ohne weiteres zurückgewonnen werden können. Wieterhin soll die Behandlung von Leuchtstofflampen unterschiedlicher Gestalt, d.h. mit kurzen oder langen, gebogenen oder langgestreckten, Gasentladungsgefäßen oder kugel- oder ellipsoidförmige Hüllkolben möglich und dabei gleichfalls eine hohe Durchsatzrate an verarbeiteten Lampen gewährleistet sein. Ebenso ist es wünschenswert, daß die Auftrennung des Leuchtstoffgemisches in seine Bestandteile durch eine Zerkleinerung und Ankonzentrierung der von der Glaswandung entfernten Leuchtstoffbeschichtung ermöglicht wird, um kostenintensive und zeitraubende Auftrennungstechniken zu umgehen.

Diese Aufgabe wird nun gelöst durch das Verfahren gemäß Hauptanspruch. Die Unteransprüche betreffen besonders bevorzugte Ausführungsformen dieses Erfindungsgegenstandes.

Gegenstand der Erfindung ist somit ein Verfahren zur Rückgewinnung des Leuchtstoffes bzw. des Leuchtstoffgemisches und des Quecksilbers von ausgebrannten bzw. nicht-funktionsfähigen Leuchtstofflampen, durch Abtrennen der Enden des Gasentladungsgefäßes der Leuchtstofflampen, Ausblasen des Leuchtstoffes bzw. des Leuchstoffgemisches und des Quecksilbers mit einem gasförmigen Medium aus dem Gasentladungsgefäß, Sammeln und Auftrennen des ausgeblasenen Gemisches, das dadurch gekennzeichnet ist, daß mindestens ein Ausblasvorgang mit einem mit einem Leuchtstoff oder einem Leuchtstoffgemisch und gegebenenfalls Quecksilber beladenen gasförmigen Medium durchgeführt wird.

Es hat sich gezeigt, daß nach mechanischer oder thermischer Abtrennung bzw. Öffnung der Enden des Gasentladungsgefäßes ein gasförmiges Medium zum Beispiel Luft, ein inertes Gas oder eine inerte Gasmischung, das mit einem Leuchtstoff oder einem Leuchtstoffgemisch und gegebenenfalls Quecksilber beladen ist, mindestens einmal in das Gasentladungsgefäß eingeleitet wird. Besonders bevorzugt ist es, das beladene gasförmige Medium mit Hilfe einer Venturi-Düse in das Gasentladungsgefäß einzublasen. Durch diesen oder weitere Ausblasvorgänge mit dem mit dem Leuchtstoff oder dem Leuchstoffgemisch und dem Quecksilber beladenen gasförmigen Medium wird die überraschende Wirkung erzielt, daß eine vollständige Beseitigung der anhaftenden Leuchtstoffe und des Quecksilbers erreicht wird. Dabei hat sich überraschenderweise gezeigt, daß durch das erneute Einblasen des mit dem Leuchtstoff bzw. Leuchtstoffgemisch und gegebenenfalls Quecksilber beladenen gasförmigen Mediums in dem Ausblasvorgang offenbar die üblicherweise auftretenden Strömungsverhältnisse in der Leuchtstoffröhre, insbesondere gebogenen Röhren, d.h. das Auftreten stehender Wellen, dermaßen verändert werden, daß eine annähernd quantitative Abtrennung der Leuchtstoffbeschichtung von der Glasinnenwand des Gasentladungsgefäßes erzielt wird.

Ein weiterer und entscheidender Vorteil des im Kreislauf wieder eingeblasenen mit Leuchtstoffgemisch und Quecksilber beladenen gasförmigen Mediums ist die Ankonzentrierung der Substanzen durch die in den Ausblasvorgängen von der Glaswandung entfernten Leuchtstoffbeschichtung. Gleichfalls führt dieses im Zyklus laufende Verfahren zu einer Zerkleinerung der im ersten Ausblasvorgang als dünne Plättchen von der Glaswandung abgelösten Leuchtstoffbeschichtung, was die Auftrennung in die einzelnen Leuchstoffkomponenten bei dem sich anschließenden Aufarbeitungsverfahren zusätzlich erleichtert.

Das in dem vorhergehenden Ausblasvorgang verwendete mit Leuchtstoff oder einem Leuchtstoffgemisch und gegebenenfalls Quecksilber beladene gasförmige Medium kann für nachfolgende Ausblasvorgänge so oft verwendet werden, bis eine zur Aufarbeitung der Leuchtstoffe oder Leuchtstoffgemische und gegebenenfalls Quecksilber erforderliche Konzentration dieser Stoffe im gasförmigen Medium erreicht ist.

Entscheidend ist der weitere Vorteil, daß vor dem ersten Ausblasvorgang die Art des Leuchtstoffes oder des Leuchtstoffgemisches optisch festgestellt werden kann, wobei die Halophosphat-Leuchtstoffe ein kontinuierliches Spektrum, die Seltenerd-Leuchtstoffe jedoch in ihrem Spektrum drei Linien im Spektrum aufweisen. Da durch die mindestens einmalige Zuführung des mit derselben Art des Leuchtstoffes oder Leuchtstoffgemisches beladenen gasförmigen Mediums eine Vermischung verschiedener Leuchtstoffarten bei dem Ausblasvorgängen vermieden wird, ist natürlich die anschließende Aufarbeitung dieser Stoffe wesentlich erleichtert.

Nach einer bevorzugten Ausführungsform der Erfindung kann dem gasförmigen Medium nach dem zweiten Ausblasvorgang ein pulverförmiges, abreibfestes Material zum Beispiel Quarzsand zugesetzt werden. Hierdurch kann die Entfernung der an der Innenwand des Gasentladungsgefäßes anhaftenden Leuchtstoffe und Quecksilbers noch weiter gesteigert werden. Außerdem ist es ohne weiteres möglich, die Leuchtstoffbestandteile und das Quecksilber von dem pulverförmigen abreibbeständigen Material insbesondere dem bevorzugt eingesetzten Quarzsand abzutrennen.

Gemäß einer bevorzugten Ausführungsform der Erfindung können nach ein oder mehreren Ausblasvorgängen der Leuchtstoff oder das Leuchtstoffgemisch und das Quecksilber aus dem mit diesen Stoffen beladenen Medium vor dem Zusetzen des pulverförmigen abreibfesten Materials abgetrennt und sofort der weiteren Auftrennung zugeführt werden, die aufgrund des Anfallens zerkleinerter und konzentrierter Mengen des anfallenden Leuchtstoffmaterials erleichtert und beschleunigt wird. Das gasförmige Medium kann anschließend mit dem pulverförmigen abriebfesten Material versetzt und wiederverwendet werden.

Nach einer bevorzugten Ausführungform kann das pulverförmige abriebfeste Material nach jedem oder nach beliebig vielen Ausblasvorgängen gesammelt und wiederverwendet werden.

Mit Hilfe dieses erfindungsgemäßen Verfahrens ist es möglich, nicht nur kurze oder lange gerade röhrenförmige Gasentladungsgefäße, sondern auch gebogene Gasentladungsröhren oder kugel- oder ellipsoidförmige mit Leuchtstoff oder Leuchtstoffgemisch beschichtete Hüllkolben von Gasentladungsgefäßen, wie sie in den neuerdings häufig eingesetzten Leuchtstofflampen mit normaler Schraubfassung verwendet werden, zu verarbeiten.

Die oben erwähnten und nachfolgenden Ausführungsformen und Vorteile der Erfindung werden in der folgenden Beschreibung der Erfindung anhand des Beispiels näher erläutert.

### Beispiel

Erfindungsgemäß wird, nachdem man zuerst optisch die Art des Leuchtstoffes, in diesem Fall ein Halophosphat-Leuchtstoff in dem Gasentladungsgefäß feststellt, Luft als gasförmiges Medium, das bereits Halophosphat-Leuchtstoffe enthält, mit Hilfe eines Gebläses und einer Venturi-Düse in einen der beiden offenen Enden eines U-förmigen Gasentladungsgefäßes einer Kompakt-Leuchtstofflampe eingeblasen. Das an dem anderen offenen Ende des Gasentladungsgefäßes austretende gasförmige Medium, welches zusätzlich mit dem abgelösten Leuchtstoffgemisch und Quecksilber beladen ist, wird über ein Absaugrohr abgeführt. Nach diesem Ausblasvorgang wird das mit dem Halophosphat-Leuchtstoff und Quecksilber beladene gasförmige Medium erneut mit Hilfe der Venturi-Düse in das Gasentladungsgefäß geleitet und anschließend über eine Zuleitung in ein Zyklon geführt, um eine Auftrennung zwischen den festen und den gasförmigen Bestandteilen zu erreichen. Das abgetrennte und zum Teil mit Quecksilber vermischte Leuchtstoffgemisch wird dann in an sich bekannter Weise aufgearbeitet. Die Abtrennung des Quecksilbers von dem gasförmigem Medium erfolgt ebenfalls in an sich bekannter Weise. In dieser Weise gelingt eine annähernd 100%-ige Rückgewinnung der Leuchtstoffe und des Quecksilbers.

## Patentansprüche

1. Verfahren zur Rückgewinnung des Leuchtstoffes bzw. Leuchtstoffgemisches und des Quecksilbers von ausgebrannten bzw. nicht-funktionsfähigen Leuchtstofflampen, durch Abtrennen der Enden des Gasentladungsgefäßes der Leuchtstofflampen, Ausblasen des Leuchtstoffes bzw. Leuchtstoffgemisches und des Quecksilbers mit einem gasförmigen Medium aus dem Gasentladungsgefäß, Sammeln und Auftrennen des ausgeblasenen Gemisches, **dadurch gekennzeichnet**, daß mindestens ein Ausblasvorgang mit einem mit einem Leuchtstoff oder einem Leuchtstoffgemisch und gegebenenfalls Quecksilber beladenen gasförmigen Medium durchgeführt wird.

2. Verfahren nach Anspruch 1, **dadurch gekennzeichnet**, daß die Zufuhr des beladenen gasförmigen Mediums in das Gasentladungsgefäß mit Hilfe einer Venturi-Düse erfolgt.

3. Verfahren nach Anspruch 1 oder 2, **dadurch gekennzeichnet**, daß das bei einem vorhergehenden Ausblasvorgang verwendete mit einem Leuchtstoff oder einem Leuchtstoffgemisch und gegebenenfalls Quecksilber beladenen gasförmige Medium für den jeweils folgenden Ausblasvorgang verwendet wird.

4. Verfahren nach mindestens einem der Ansprüche 1 bis 3, **dadurch** **gekennzeichnet**, daß die Art des Leuchtstoffes oder des Leuchtstoffgemisches in dem Gasentladungsgefäß vor dem ersten Ausblasvorgang optisch festgestellt wird.

5. Verfahren nach Anspruch 4, **dadurch gekennzeichnet**, daß das mit derselben Art des Leuchtstoffes oder des Leuchtstoffgemisches und gegebenenfalls Quecksilber beladene gasförmige Medium dem Gasentladungsgefäß mindestens einmal zugeführt wird.

6. Verfahren nach mindestens einem der Ansprüche 1 bis 5, **dadurch** **gekennzeichnet**, daß als gasförmiges Medium Luft, ein inertes Gas oder eine inerte Gasmischung verwendet wird.

7. Verfahren nach mindestens einem der Ansprüche 1 bis 6, **dadurch** **gekennzeichnet,** daß dem gasförmigen Medium bei mindestens einem der Ausblasvorgänge ein pulverförmiges abriebfestes Material zugesetzt wird.

8. Verfahren nach mindestens einem der Ansprüche 1 bis 7, **dadurch** **gekennzeichnet,** daß das pulverförmige abreibfeste Material nach jedem oder nach beliebig vielen Ausblasvorgängen gesammelt und wiederverwendet wird.

9. Verfahren nach mindestens einem der Ansprüche 1 bis 8, **dadurch** **gekennzeichnet,** daß der Leuchtstoff oder das Leuchtstoffgemisch und gegebenenfalls Quecksilber vor dem Zusetzen des pulverförmigen abriebfesten Materials von dem mit dem Leuchtstoff oder dem Leuchtstoffgemisch und gegebenenfalls Quecksilber beladenen gasförmigen Medium abgetrennt werden.

10. Verfahren nach mindestens einem der Ansprüche 1 bis 9, **dadurch** **gekennzeichnet**, daß als pulverförmiges, abriebfestes Material Quarzsand eingesetzt wird.

11. Verfahren nach mindestens einem der Ansprüche 1 bis 10, **dadurch** **gekennzeichnet**, daß als Leuchtstofflampen Gasentladungsgefäße in Form gerader oder gebogener Gasentladungsröhren oder kugel- oder ellipsoidförmige mit Leuchtstoff oder Leuchtstoffgemisch beschichtete Hüllkolben des Gasentladungsgefäßes behandelt werden.

## Claims

1. Method for recovering luminophor, or luminophors mixture, and the mercury from burnt-out or unserviceable fluorescent lamps, by severing the ends of the gas discharge vessel of the fluorescent lamps, blowing out with a gaseous medium from the gas discharge vessel the luminophor or the luminophors mixture and the mercury, collecting and separating the blown-out mixture, **characterised** in that at least one blow-out process is carried out with a gaseous medium charged with a luminophor or a luminophors mixture and, if necessary mercury.

2. Method according to claim 1, **characterised** in that the supply of the charged gaseous medium into the gas discharge vessel takes place with the aid of a venturi nozzle.

3. Method according to claim 1 or 2, **characterised** in that the gaseous medium charged with a luminophor or a luminophors mixture and, if necessary mercury, used in a previous blow-out process, is used in the following blow-out process.

4. Method according to at least one of the claims 1 to 3, **characterised** in that the type of luminophor or luminophors mixture in the gas discharge vessel is optically determined prior to the first blow-out process.

5. Method according to claim 4, **characterised** in that the gaseous medium charged with the same type of luminophor or luminophors mixture and, if necessary mercury, is supplied to the gas discharge vessel at least once.

6. Method according to at least one of the claims 1 to 5, **characterised** in that air, an inert gas or an inert gas mixture is used as the gaseous medium.

7. Method according to at least one of the claims 1 to 6, **characterised** in that a pulverulent, abrasion resistant material is added to the gaseous medium during at least one of the blow-out processes.

8. Method according to at least one of the claims 1 to 7, **characterised** in that the pulverulent, abrasion resistant material is collected and reused after each blow-out process or after any number of blow-out processes.

9. Method according to at least one of the claims 1 to 8, **characterised** in that prior to the addition of the pulverulent, abrasion resistant material, the luminophor or the luminophors mixture and, if necessary mercury, are separated from the gaseous material charged with the luminophor or the luminophor mixture and, if necessary mercury.

10. Method according to at least one of the claims 1 to 9, **characterised** in that quartz sand is used as the pulverulent, abrasion resistant material.

11. Method according to at least one of the claims 1 to 10, **characterised** in that gas discharge vessels in the form of straight or curved gas discharge tubes or spherical or ellipsoidal envelopes of the gas discharge vessel coated with luminophor or luminophors mixture are treated as fluorescent lamps.

## Revendications

1. Procédé pour la récupération de la substance luminescente ou du mélange de substances luminescentes et du mercure de tubes fluorescents usagés ou incapables de fonctionner, par découpage des extrémités de l'enceinte à décharge gazeuse des tubes fluorescents, extraction par soufflage de la substance luminescente ou du mélange de substances luminescentes et du mercure de l'enceinte à décharge gazeuse au moyen d'un milieu gazeux, collectage et séparation du mélange extrait par soufflage, caractérisé en ce que l'on effectue au moins une étape d'extraction par soufflage au moyen d'un milieu gazeux chargé avec une substance luminescente ou un mélange de substance luminescente et, éventuellement, du mercure.

2. Procédé selon la revendication 1, caractérisé en ce que l'envoi du milieu gazeux chargé dans l'enceinte à décharge gazeuse est réalisé au moyen d'un tube de Venturi.

3. Procédé selon la revendication 1 ou 2, caractérisé en ce que l'on utilise le milieu gazeux utilisé lors d'une étape précédente d'extraction par soufflage et chargé avec une substance luminescente ou un mélange de substances luminescentes et, éventuellement, du mercure pour l'étape suivante d'extraction par soufflage.

4. Procédé selon au moins une des revendications 1 à 3, caractérisé en ce que le type de la substance luminescente ou du mélange de substances luminescentes se trouvant dans l'enceinte à décharge gazeuse est déterminé de manière optique avant la première étape d'extraction par soufflage.

5. Procédé selon la revendication 4, caractérisé en ce que l'on introduit au moins une fois le milieu gazeux chargé avec le même type de substance luminescente ou de mélange de substances luminescentes et, éventuellement, de mercure dans l'enceinte à décharge gazeuse.

6. Procédé selon au moins l'une des revendications 1 à 5, caractérisé en ce que l'on utilise, en tant que milieu gazeux, de l'air, un gaz inerte ou un mélange de gaz inertes.

7. Procédé selon au moins l'une des revendications 1 à 6, caractérisé en ce que l'on ajoute une matière pulvérulente résistant à l'abrasion au milieu gazeux, au moins pendant une des étapes d'extraction par soufflage.

8. Procédé selon au moins l'une des revendications 1 à 7, caractérisé en ce que l'on collecte et l'on réutilise la matière pulvérulente résistant à l'abrasion après chaque étape d'extraction par soufflage ou après un nombre arbitraire d'étapes d'extraction par soufflage.

9. Procédé selon au moins l'une des revendications 1 à 8, caractérisé en ce que l'on sépare la substance luminescente ou le mélange de substances luminescentes et, éventuellement, le mercure du milieu gazeux chargé avec la substance luminescente ou le mélange de substances luminescentes et, éventuellement, le mercure avant l'addition de la matière pulvérulente résistant à l'abrasion.

10. Procédé selon au moins l'une des revendications 1 à 9, caractérisé en ce que l'on utilise du sable siliceux en tant que matière pulvérulente résistant à l'abrasion.

11. Procédé selon au moins l'une des revendications 1 à 10, caractérisé en ce que l'on traite, en tant que tubes fluorescents, des enceintes à décharge gazeuse sous forme de tube à décharge gazeuse droit ou courbé ou des ampoules enveloppantes de l'enceinte à décharge gazeuse, en forme de sphère ou d'ellipsoïde et recouvertes de substance luminescente ou de mélange de substances luminescentes.
